# EUROPÄISCHE PATENTSCHRIFT

(11) **EP 2 079 141 B1**
(45) Veröffentlichungstag und Bekanntmachung des Hinweises auf die Patenterteilung: **07.05.2014**
(21) Anmeldenummer: 08000495.5
(22) Anmeldetag: 11.01.2008
(51) Int. Cl.: H02H 7/08, G05B 9/03

(54) **Anschalteinrichtung für einen Elektromotor mit integrierter Sicherheitstechnik**
Starting device for an electromotor with integrated safety technology
Dispositif de démarrage pour un moteur électrique doté d'une technique de sécurité intégrée

(43) Veröffentlichungstag der Anmeldung: 15.07.2009
(73) Patentinhaber: Siemens Aktiengesellschaft, 80333 München (DE)
(72) Erfinder: Braune, Christian, 92224 Amberg (DE); Fröhlich, Paul, 92237 Sulzbach-Rosenberg (DE); Krämer, Werner, 92421 Schwandorf (DE); Neumann, Bernhard, 90556 Cadolzburg (DE); Prölss, Manfred, 92263 Ebermannsdorf (DE); Schumann, Gordon, 91052 Erlangen (DE)

(56) Entgegenhaltungen:
- DE-A1-102005 028 559
- DE-A1-102006 046 286

## Beschreibung

Die vorliegende Erfindung betrifft eine Anschalteinrichtung für einen Elektromotor,
- wobei die Anschalteinrichtung eine Motorsteuereinrichtung, eine Steuerschaltung, eine sicherheitsgerichtete Schaltung und eine sichere Schalteinrichtung umfasst,
- wobei der Motorsteuereinrichtung Betriebsinformationen des Elektromotors zugeführt werden,
- wobei die Motorsteuereinrichtung anhand der ihr zugeführten Betriebsinformationen des Elektromotors einen betriebsmäßigen Sollschaltzustand für ein Schütz ermittelt und ausgibt,
- wobei der sicherheitsgerichteten Schaltung ein sicherheitsgerichtetes Abschaltsignal zuführbar ist.

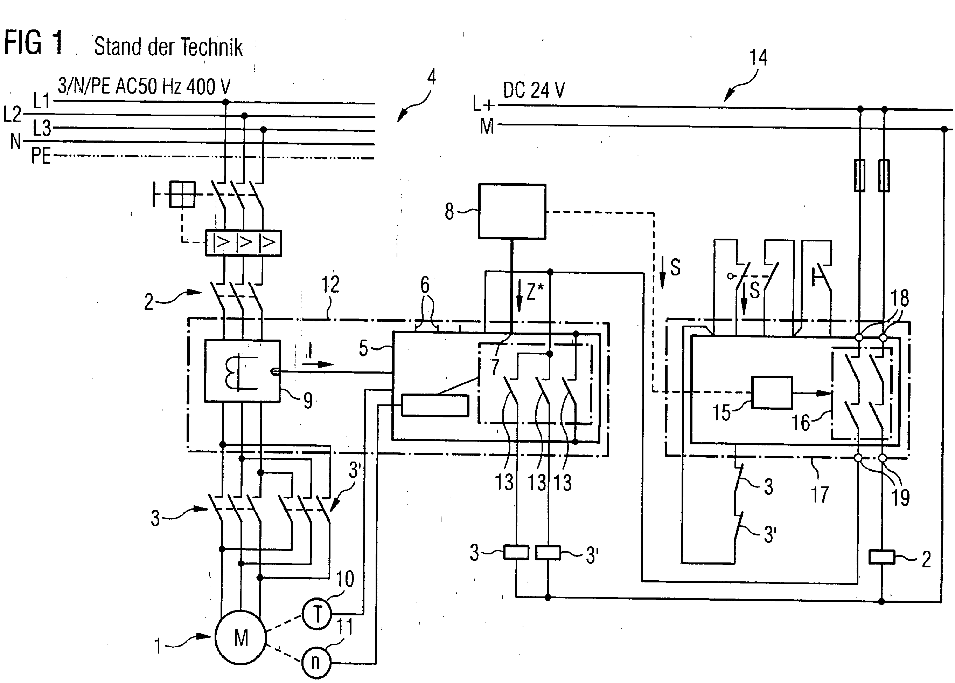

Derartige Anschalteinrichtungen sind allgemein bekannt. Nachfolgend wird in Verbindung mit FIG 1 eine typische Ausgestaltung einer Anschalteinrichtung des Standes der Technik beschrieben.

Gemäß FIG 1 ist ein Elektromotor 1 über ein vorgeordnetes Schütz 2 und ein erstes nachgeordnetes Schütz 3 an eine Energieversorgung 4 (in der Regel ein beispielsweise dreiphasiges Drehstromnetz) anschaltbar. Das Vorhandensein sowohl des vorgeordneten Schützes 2 als auch des ersten nachgeordneten Schützes 3 dient hierbei dem Zweck, zwei voneinander unabhängige Schaltmöglichkeiten zu schaffen, so dass auch im Falle sicherheitsgerichteter Abschaltsignale (Not-Aus und dergleichen) der Elektromotor 1 sicher von der Energieversorgung 4 getrennt werden kann. Falls ein sicheres Abschalten nicht erforderlich ist, kann eines der beiden Schütze 2, 3, beispielsweise das vorgeordnete Schütz 2, entfallen.

Gemäß FIG 1 ist weiterhin dem ersten nachgeordneten Schütz 3 ein zweites nachgeordnetes Schütz 3' parallel geschaltet.

Mittels der beiden nachgeordneten Schütze 3, 3' kann beispielsweise eine Wendeschaltung realisiert werden. Alternativ (bzw. im Falle von mehr als zwei nachgeordneten Schützen 3, 3' zusätzlich) können die nachgeordneten Schütze 3, 3' eine Stern-Dreieck-Schaltung realisieren.

Unabhängig von der Anzahl vorhandener nachgeordneter Schütze 3, 3' ist in der Regel zu jedem Zeitpunkt stets maximal eines der nachgeordneten Schütze 3, 3' geschaltet. In vielen Fällen erfolgt hierbei nicht nur eine elektrisch gegeneinander verriegelte Ansteuerung, sondern sind die nachgeordneten Schütze 3, 3' auch mechanisch gegeneinander verriegelt. In Ausnahmefällen können jedoch auch mehrere Schütze simultan geschaltet werden. Dies ist im Rahmen der vorliegenden Erfindung jedoch von untergeordneter Bedeutung. Weiterhin ist es auch nicht erforderlich, dass mehr als ein einziges nachgeordnetes Schütz 3, 3' vorhanden ist. Wenn der Elektromotor 1 in einer einzigen Betriebsart betrieben werden soll, ist das erste nachgeordnete Schütz 3 völlig ausreichend.

Die Schütze 2, 3, 3' werden von einer Motorsteuereinrichtung 5 angesteuert. Der Motorsteuereinrichtung 5 werden zu diesem Zweck Betriebsinformationen Z*, n, I, T zugeführt. Beispielsweise kann der Motorsteuereinrichtung 5 über Einzelanschlüsse 6 oder über eine Busschnittstelle 7 von einer übergeordneten Steuereinrichtung 8 ein Sollbetriebszustand Z* des Elektromotors 1 vorgegeben werden. In Einzelfällen ist es ausreichend, der Motorsteuereinrichtung 5 ausschließlich den Sollbetriebszustand Z* zuzuführen. In vielen Fällen werden der Motorsteuereinrichtung 5 jedoch zusätzlich Informationen über den Istzustand des Elektromotors 1 zugeführt. Beispielsweise kann mittels einer Stromerfassungseinrichtung 9 ein Iststrom I des Elektromotors 1 erfasst werden. Ein für den Iststrom I repräsentatives Signal wird in diesem Fall (in der Regel über einen Einzelanschluss 6) der Motorsteuereinrichtung 5 zugeführt. Auf analoge Weise können mittels eines Temperatursensors 10 und eines Drehzahlgebers 11 eine Isttemperatur T und eine Istdrehzahl n des Elektromotors 1 erfasst und (in der Regel über je einen Einzelanschluss 6) der Motorsteuereinrichtung 5 zugeführt werden.

In einer (sowohl im Stand der Technik als auch im Rahmen der vorliegenden Erfindung) bevorzugten Ausgestaltung sind die Stromerfassungseinrichtung 9 und die Motorsteuereinrichtung 5 in einem gemeinsamen Gehäuse 12 angeordnet, so dass sie eine vorkonfektionierte Baueinheit bilden. Der Temperatursensor 10 und der Drehzahlgeber 11 sind hingegen in der Regel außerhalb des Gehäuses 12 angeordnet.

Die Motorsteuereinrichtung 5 ermittelt anhand der ihr zugeführten Betriebinformationen Z*, n, I, T des Elektromotors 1 betriebsmäßige Sollschaltzustände für die nachgeordneten Schütze 3, 3'. Sie steuert sodann betriebsmäßig (also nicht sicher) Schalter 13 an, so dass den nachgeordneten Schützen 3, 3' (je nach Schaltzustand der Schalter 13) eine Steuerspannung 14 zugeführt wird oder nicht zugeführt wird, die nachgeordneten Schütze 3, 3' also entsprechend geschaltet werden. Betriebsmäßig wird der Elektromotor 1 daher über eines der nachgeordneten Schütze 3, 3' an die Energieversorgung 4 angeschaltet. Die Schalter 13 können beispielsweise als elektromagnetische Schalter (Relais oder dergleichen) oder als elektronische Schalter (Transistor, FET, Optokoppler, ...) ausgebildet sein.

Weiterhin sind bei der Ausgestaltung der Anschalteinrichtung gemäß FIG 1 eine sicherheitsgerichtete Schaltung 15 und eine sichere Schalteinrichtung 16 vorhanden. Die sicherheitsgerichtete Schaltung 15 und die sichere Schalteinrichtung 16 sind hierbei in einem gemeinsamen Gehäuse 17 angeordnet, so dass die im Gehäuse 17 angeordneten Komponenten eine vorkonfektionierte Baueinheit bilden.

Das letztgenannte Gehäuse 17 weist (mindestens) einen Eingangsanschluss 18 sowie (mindestens) einen Ausgangsanschluss 19 auf. Der Eingangsanschluss 18 und der Ausgangsanschluss 19 sind über die sichere Schalteinrichtung 16 miteinander verbunden. Der sicherheitsgerichteten Schaltung 15 ist ein sicherheitsgerichtetes Abschaltsignal S zuführbar.

Das Zuführen des sicherheitsgerichteten Abschaltsignals S erfolgt im Stand der Technik in der Regel über eine Einzelverdrahtung. So ist dies auch in FIG 1 dargestellt. Es ist jedoch ebenfalls bekannt, das Abschaltsignal S der sicherheitsgerichteten Schaltung 15 über eine geeignete Busanbindung (beispielsweise zur übergeordneten Steuereinrichtung 8) zuzuführen. Dies ist in FIG 1 in gestrichelten Linien angedeutet.

Wenn der sicherheitsgerichteten Schaltung 15 das sicherheitsgerichtete Abschaltsignal S zugeführt wird, öffnet die sicherheitsgerichtete Schaltung 15 die sichere Schalteinrichtung 16 sicher. Dadurch wird die Steuerspannung 14 vom vorgeordneten Schütz 2 getrennt, so dass das vorgeordnete Schütz 2 öffnet. In der Regel wird weiterhin die Motorsteuereinrichtung 5 (genauer: werden die Schalter 13 der Motorsteuereinrichtung 5) von der Steuerspannung 14 getrennt, so dass unabhängig von dem Steuerzustand der Schalter 13 auch die nachgeordneten Schütze 3, 3' abfallen. Im Ergebnis wird hierdurch der Elektromotor 1 sicher von der Energieversorgung 4 getrennt.

Weiterhin ist es möglich, einem der Einzelanschlüsse 6 als Eingangssignal die an den Schaltern 13 anliegende Steuerspannung 14 zuzuführen. Dadurch ist der Motorsteuereinrichtung 5 bekannt, dass die sicherheitsgerichtete Abschaltung auf Grund des sicherheitsgerichteten Abschaltsignals S vorgenommen wurde.

Die obenstehend beschriebene Ausgestaltung der Anschalteinrichtung erfüllt die hohen Sicherheitsanforderungen gemäß Kategorie 4 der EN 954-1 und SIL 3 nach IEC 61508. Diese Anforderungen werden auch im Rahmen der Ausgestaltungen erfüllt, die nachfolgend in Verbindung mit der vorliegenden Erfindung erläutert werden. Sowohl im vorstehend beschriebenen Stand der Technik als auch im Rahmen der vorliegenden Erfindung sind jedoch einfachere Gestaltungen möglich. Diese einfacheren Gestaltungen sind dann möglich, wenn lediglich niedrigere Sicherheitsanforderungen erfüllt werden müssen.

Die obenstehend beschriebene Anschalteinrichtung arbeitet bereits recht gut. Sie weist jedoch einige Probleme auf. Zum einen ist die vorzunehmende Verdrahtung relativ aufwändig und mühsam. Fehlverdrahtungen können nicht ausgeschlossen werden. Zum anderen muss das Unterbrechen der Energieversorgung 4 durch das vorgeordnete Schütz 2 separat an die Motorsteuereinrichtung 5 gemeldet werden, da die Motorsteuereinrichtung 5 anderenfalls das sicherheitsgerichtete Abschalten als Störung interpretieren würde. Es ist daher das zusätzliche Zuführen der Steuerspannung 14 zu einem Einzelanschluss 6 der Motorsteuereinrichtung 5 erforderlich.

Die Aufgabe der vorliegenden Erfindung besteht darin, eine Anschalteinrichtung für einen Elektromotor zu schaffen, die einfacher aufgebaut ist und komfortabel zu verdrahten ist.

Die Aufgabe wird durch eine Anschalteinrichtung mit den Merkmalen des Anspruchs 1 gelöst. Vorteilhafte Ausgestaltungen sind Gegenstand der abhängigen Ansprüche 2 bis 16.

Erfindungsgemäß umfasst die Anschalteinrichtung eine Motorsteuereinrichtung, eine Steuerschaltung, eine sicherheitsgerichtete Schaltung und eine sichere Schalteinrichtung. Der Motorsteuereinrichtung werden Betriebsinformationen des Elektromotors zugeführt. Die Motorsteuereinrichtung ermittelt anhand der ihr zugeführten Betriebsinformationen des Elektromotors einen betriebsmäßigen Sollschaltzustand für ein Schütz und übermittelt diesen an die Steuerschaltung. Der sicherheitsgerichteten Schaltung ist ein sicherheitsgerichtetes Abschaltsignal zuführbar. Zumindest die Steuerschaltung, die sicherheitsgerichtete Schaltung und die sichere Schalteinrichtung sind in einem gemeinsamen ersten Gehäuse angeordnet, so dass die im ersten Gehäuse angeordneten Komponenten eine erste vorkonfektionierte Baueinheit bilden. Das erste Gehäuse weist einen Eingangsanschluss sowie einen über die sichere Schalteinrichtung mit dem Eingangsanschluss verbundenen Ausgangsanschluss auf. Die sichere Schalteinrichtung ist innerhalb des ersten Gehäuses mit der Steuerschaltung und der sicherheitsgerichteten Schaltung derart verbunden, dass im Falle des Zuführens des sicherheitsgerichteten Abschaltsignals zur sicherheitsgerichteten Schaltung die sicherheitsgerichtete Schaltung die sichere Schalteinrichtung sicher öffnet und anderenfalls die Steuerschaltung die sichere Schalteinrichtung entsprechend dem ihr zugeführten Sollschaltzustand ansteuert. Das Schütz wird über den Ausgangsanschluss geschaltet. Der Elektromotor ist über das Schütz an eine Energieversorgung anschaltbar.

Wie auch im Stand der Technik, weist die Motorsteuereinrichtung vorzugsweise eine Busschnittstelle auf, über die die Motorsteuereinrichtung mit einer übergeordneten Steuereinrichtung verbindbar ist.

Weiterhin sind vorzugsweise die Motorsteuereinrichtung und die Steuerschaltung über einen Bus miteinander verbunden. Dadurch kann die Motorsteuereinrichtung den Sollschaltzustand über den Bus an die Steuerschaltung übermitteln.

In einer besonders bevorzugten Ausgestaltung ist auch die sicherheitsgerichtete Schaltung an den Bus angeschlossen.

Durch diese Maßnahme wird beispielsweise ermöglicht, dass das sicherheitsgerichtete Abschaltsignal der Motorsteuereinrichtung über die Busschnittstelle zugeführt wird und die Motorsteuereinrichtung das sicherheitsgerichtete Abschaltsignal über den Bus an die sicherheitsgerichtete Schaltung weiterleitet.

Die Busschnittstelle und der Bus können als solche fehlersicher sein. Wenn hingegen die Busschnittstelle und/oder der Bus als solche nicht fehlersicher ist bzw. sind, muss zumindest das sicherheitsgerichtete Abschaltsignal gemäß einem fehlersicheren Busprotokoll an die sicherheitsgerichtete Schaltung übermittelt werden. Derartige Busprotokolle sind bekannt. Rein beispielhaft wird auf das sogenannte PROFIsafe-Protokoll verwiesen.

Wenn auch die sicherheitsgerichtete Schaltung an den Bus angeschlossen ist, ist es weiterhin möglich, dass die sicherheitsgerichtete Schaltung eine Meldung über einen Schaltzustand der sicheren Schalteinrichtung über den Bus an die Motorsteuereinrichtung übermittelt. Die Motorsteuereinrichtung kann in diesem Fall die Meldung intern auswerten. Alternativ oder zusätzlich kann sie die Meldung über die Busschnittstelle an die übergeordnete Steuereinrichtung übermitteln.

Im Falle des Vorhandenseins der Busschnittstelle werden die Betriebsinformationen des Elektromotors der Motorsteuereinrichtung vorzugsweise zumindest teilweise über die Busschnittstelle zugeführt. Alternativ oder zusätzlich ist es jedoch möglich, dass die Betriebsinformationen des Elektromotors der Motorsteuereinrichtung zumindest teilweise über Einzelanschlüsse zugeführt werden. Hierbei sind auch Mischformen möglich. Beispielsweise kann ein erster Teil der Betriebsinformationen (insbesondere Istzustände des Elektromotors) der Motorsteuereinrichtung über Einzelanschlüsse zugeführt werden, weitere Betriebsinformationen (insbesondere ein Sollbetriebszustand) über die Busschnittstelle.

Die Motorsteuereinrichtung kann außerhalb des ersten gemeinsamen Gehäuses angeordnet sein, in dem die Steuerschaltung, die sicherheitsgerichtete Schaltung und die sichere Schalteinrichtung angeordnet sind. Alternativ kann auch die Motorsteuereinrichtung in diesem Gehäuse angeordnet sein.

Die Betriebsinformationen des Elektromotors können beispielsweise eine Isttemperatur, eine Istdrehzahl und/oder einen Iststrom umfassen. Insbesondere im Falle eines Iststroms kann hierbei eine korrespondierende Stromerfassungseinrichtung in demselben Gehäuse angeordnet sein, in dem die Motorsteuereinrichtung angeordnet ist, so dass die Stromerfassungseinrichtung und die Motorsteuereinrichtung eine vorkonfektionierte Baueinheit bilden.

Weitere Vorteile und Einzelheiten ergeben sich aus der nachfolgenden Beschreibung eines Ausführungsbeispiels in Verbindung mit den Zeichnungen. Es zeigen in Prinzipdarstellung:
- FIG 1: eine Anschalteinrichtung des Standes der Technik,
- FIG 2: eine erfindungsgemäße Anschalteinrichtung,
- FIG 3: eine mögliche Ausgestaltung einer ersten vorkonfektionierten Baueinheit und
- FIG 4: eine Modifikation der Anschalteinrichtung von FIG 2.

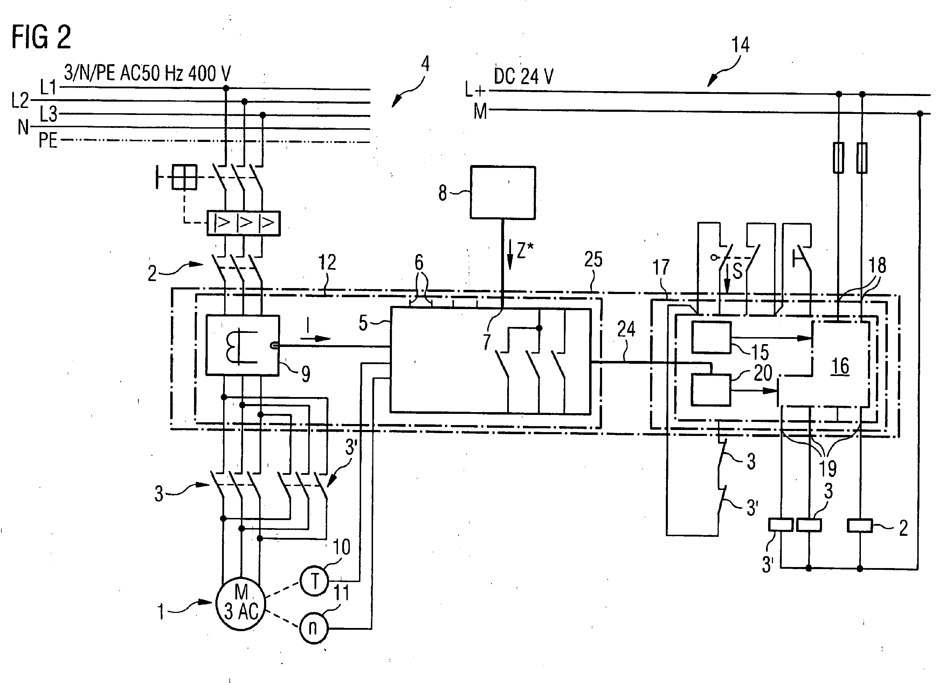

Das Grundprinzip der vorliegenden Erfindung wird nachfolgend in Verbindung mit FIG 2 näher erläutert. Soweit hierbei in FIG 2 die gleichen Komponenten wie in FIG 1 vorhanden sind, sind sie mit den gleichen Bezugszeichen versehen. Ferner weisen diese Komponenten auch dieselben Funktionalitäten auf wie in Verbindung mit FIG 1 erläutert, soweit nachfolgend nichts anderes ausgeführt ist. Nachfolgend werden daher nur die Unterschiede der Anschalteinrichtung von FIG 2 gegenüber der Anschalteinrichtung von FIG 1 näher erläutert.

Gemäß FIG 2 ist als zusätzliche Komponente eine Steuerschaltung 20 vorhanden. Die Steuerschaltung 20 ist in demselben Gehäuse 17 angeordnet, in dem auch die sicherheitsgerichtete Schaltung 15 und die sichere Schalteinrichtung 16 angeordnet sind. Die Motorsteuereinrichtung 5 steuert nicht selbst Schalter an, sondern übermittelt die Sollschaltzustände der nachgeordneten Schütze 3, 3' an die Steuerschaltung 20. Die Steuerschaltung 20 wirkt - analog zur sicherheitsgerichteten Schaltung 15 - ebenfalls auf die sichere Schalteinrichtung 16. Die sichere Schalteinrichtung 16 ist daher innerhalb des Gehäuses 17 sowohl mit der Steuerschaltung 20 als auch mit der sicherheitsgerichteten Schaltung 15 verbunden. Die Verbindung ist derart,
- dass im Falle des Zuführens des sicherheitsgerichteten Abschaltsignals S zur sicherheitsgerichteten Schaltung 15 die sicherheitsgerichtete Schaltung 15 die sichere Schalteinrichtung 16 sicher öffnet und
- dass anderenfalls die Steuerschaltung 20 die sichere Schalteinrichtung 16 entsprechend den ihr zugeführten Sollschaltzuständen der Schütze 3, 3' ansteuert.

Die Schütze 2, 3, 3' werden über entsprechende Ausgangsanschlüsse 19 geschaltet. Der Elektromotor 1 ist über die Schütze 2, 3, 3' an die Energieversorgung 4 anschaltbar.

Der Betrieb der erfindungsgemäßen Anschalteinrichtung wird nachfolgend anhand einiger Beispiele näher erläutert.

Gemäß dem ersten Beispiel wird die Anschalteinrichtung wie folgt betrieben: Wenn der sicherheitsgerichteten Schaltung 15 das sicherheitsgerichtete Abschaltsignal S nicht zugeführt wird, bleibt das vorgeordnete Schütz 2 geschlossen. Die nachgeordneten Schütze 3, 3' werden von der Steuerschaltung 20 entsprechend den an sie übermittelten Sollschaltzuständen geschaltet. Wenn hingegen der sicherheitsgerichteten Schaltung 15 das sicherheitsgerichtete Abschaltsignal S zugeführt wird, öffnet die sicherheitsgerichtete Schaltung 15 die sichere Schalteinrichtung 16 sicher, so dass sowohl das vorgeordnete Schütz 2 als auch die nachgeordneten Schütze 3, 3' geöffnet werden.

In einem alternativen Betrieb der erfindungsgemäßen Anschalteinrichtung erfolgt der Betrieb in dem Fall, dass der sicherheitsgerichteten Schaltung 15 das sicherheitsgerichtete Abschaltsignal S nicht zugeführt wird, auf die gleiche Weise wie bei dem vorgenannten Beispiel. Wenn der sicherheitsgerichteten Schaltung 15 hingegen das sicherheitsgerichtete Abschaltsignal S zugeführt wird, steuert die sicherheitsgerichtete Schaltung 15 die sichere Schalteinrichtung 16 derart an, dass zunächst nur das vorgeordnete Schütz 2 geöffnet wird. Dessen Schaltzustand wird überwacht. Wenn das vorgeordnete Schütz 2 ordnungsgemäß abfällt, können die nachgeordneten Schütze 3, 3' weiterhin betriebsmäßig über die Steuerschaltung 20 angesteuert werden. Auf Grund des Umstands, dass das vorgeordnete Schütz 2 abgefallen ist, bleibt diese Ansteuerung jedoch ohne Wirkung auf den Energieversorgungszustand des Elektromotors 1. Wenn die sicherheitsgerichtete Schaltung 15 hingegen erkennt, dass das vorgeordnete Schütz 2 nicht abfällt, werden zusätzlich die nachgeordneten Schütze 3, 3' von der Steuerspannung 14 getrennt, so dass sie abfallen. Weiterhin kann eine Fehlermeldung ausgegeben werden.

Alternativ ist es möglich, im Fall des Zuführens des sicherheitsgerichteten Abschaltsignals S zur sicherheitsgerichteten Schaltung 15 nicht das vorgeordnete Schütz 2 anzusteuern, so dass dieses Schütz 2 geöffnet wird, sondern die nachgeordneten Schütze 3, 3'. In diesem Fall werden die Schaltzustände der nachgeordneten Schütze 3, 3' überwacht und im Falle einer Fehlfunktion eines der nachgeordneten Schütze 3, 3' das vorgeordnete Schütz 2 geöffnet. Wiederum alternativ ist es möglich alternierend das vorgeordnete Schütz 2 zu öffnen und dessen Schaltzustand zu überwachen und die nachgeordneten Schütze 3, 3' zu öffnen und deren Schaltzustände zu überwachen und gegebenenfalls entsprechend zu reagieren.

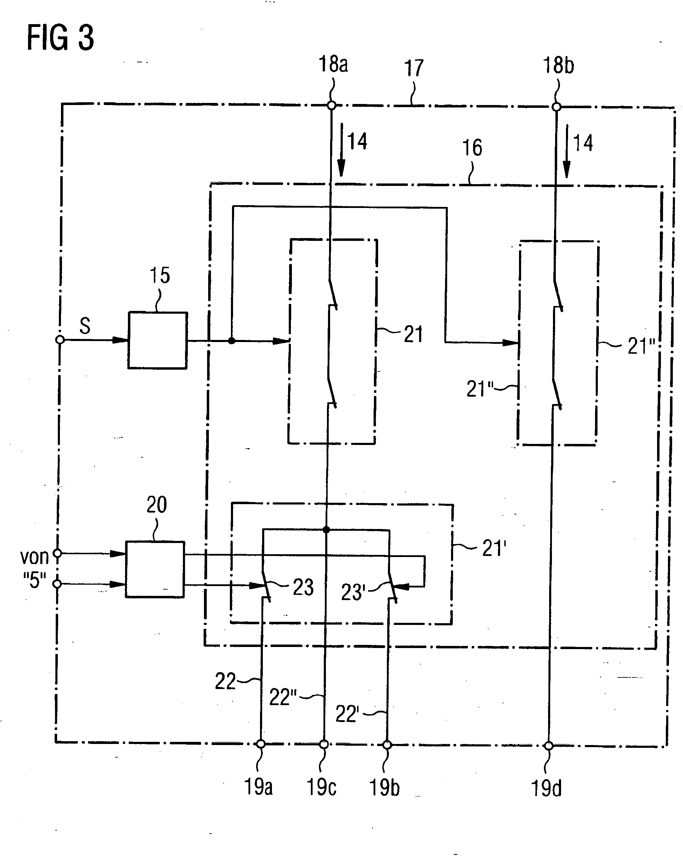

Die im Gehäuse 17 angeordneten Komponenten 15, 16, 20 können in nahezu beliebiger Weise ausgestaltet sein. Sie müssen jedoch die obenstehend erläuterte Funktionalität aufweisen. Nachfolgend wird in Verbindung mit FIG 3 - rein beispielhaft - eine mögliche Ausgestaltung der im Gehäuse 17 angeordneten Baueinheit erläutert.

Gemäß FIG 3 sind in dem Gehäuse 17 die sicherheitsgerichtete Schaltung 15, die sichere Schalteinrichtung 16 und die Steuerschaltung 20 angeordnet. Die sichere Schalteinrichtung 16 umfasst hierbei drei Schalterblöcke 21, 21' und 21". Weiterhin weist die - rein beispielhafte - Gestaltung der FIG 3 zwei Eingangsanschlüsse 18 und vier Ausgangsanschlüsse 19 auf. Die Eingangsanschlüsse 18 sind hierbei durch Hinzufügen der Kleinbuchstaben a und b voneinander unterschieden, die Ausgangsanschlüsse 19 durch Hinzufügen der Kleinbuchstaben a bis d. Über jeden Eingangsanschluss 18 ist die Steuerspannung 14 zuführbar, über jeden Ausgangsanschluss 19 abgreifbar (sofern die jeweiligen Ausgangsanschlüsse 19 über die sichere Schalteinrichtung 16 mit dem entsprechenden Eingangsanschluss 18 verbunden sind).

Gemäß FIG 3 ist der erste Eingangsanschluss 18a über die Schalterblöcke 21 und 21' mit den Ausgangsanschlüssen 19a, 19b und 19c verbunden. Der Schalterblock 21 kann beispielsweise zwei in Reihe geschaltete Schaltelemente aufweisen, beispielsweise Relais. Die Schaltelemente weisen in diesem Fall jeweils eine eigene Aktorik auf, über die ausschließlich das jeweilige Schaltelement geschaltet wird. Alternativ kann der Schalterblock 21 beispielsweise als einfacher Schalter ausgebildet sein, dessen Schaltzustand sicher überwacht wird. In diesem Fall wird bei Erkennen einer Fehlfunktion des Schalterblocks 21 von der sicherheitsgerichteten Schaltung 15 eine entsprechende Fehlermeldung ausgegeben.

Der Schalterblock 21' ist mit dem Schalterblock 21 in Reihe geschaltet. Er umfasst drei zueinander parallel geschaltete Schaltpfade 22, 22', 22". In zwei der Schaltpfade 22, 22', 22" ist je ein Schalter 23, 23' angeordnet. Der dritte der Schaltpfade 22, 22', 22" ist nicht schaltbar. Die Schaltpfade 22, 22', 22" münden in den Ausgangsanschlüssen 19a, 19b und 19c. Die Schalter 23, 23' sind von der Steuerschaltung 20 unabhängig voneinander ansteuerbar.

Der dritte Schalterblock 21" ist analog zum ersten Schalterblock 21 ausgebildet. Er verbindet den zweiten Eingangsanschluss 18b mit dem vierten Ausgangsanschluss 19d. Er wird von der sicherheitsgerichteten Schaltung 15 auf die gleiche Weise angesteuert wie der erste Schalterblock 21.

Die Schalter 23, 23' können analog zu den Schaltern 13 des Standes der Technik auf beliebige Weise ausgebildet sein, beispielsweise als elektromagnetische oder als elektronische Schalter. Die in den Schalterblöcken 21, 21" enthaltenen Schalter sind in der Regel als elektromagnetische Schalter ausgebildet. In Einzelfällen können jedoch auch diese Schalter teilweise oder insgesamt als elektronische Schalter ausgebildet sein.

Bei der Ausgestaltung gemäß FIG 3 sind die sicherheitsgerichtete Schaltung 15 und die Steuerschaltung 20 voneinander getrennte Einrichtungen 15, 20. Auch die von ihnen angesteuerten Schalterblöcke 21, 21', 21" sind getrennt voneinander. Diese Ausgestaltung weist den Vorteil auf, dass die Ansteuerung der Schalter 23, 23' (also das betriebsmäßige Schalten) unabhängig vom sicherheitsgerichteten Abschalten mittels der Schalterblöcke 21, 21" erfolgen kann.

Die nachgeordneten Schütze 3, 3' werden bei der Ausgestaltung gemäß FIG 3 vorzugsweise über die Ausgangsanschlüsse 19a, 19b geschaltet. Das vorgeordnete Schütz 2 kann über den Ausgangsanschluss 19c geschaltet werden. Alternativ kann das vorgeordnete Schütz 2 über den Ausgangsanschluss 19d geschaltet werden.

Es ist möglich, dass die Motorsteuereinrichtung 5 mit der Steuerschaltung 20 über einzelne Leitungen verbunden ist. Bevorzugt ist jedoch, dass die Motorsteuereinrichtung 5 und die Steuerschaltung 20 über einen Bus 24 miteinander verbunden sind. In diesem Fall kann die Motorsteuereinrichtung 5 den Sollschaltzustand der nachgeordneten Schütze 3, 3' über den Bus 24 an die Steuerschaltung 20 übermitteln. Bei dem Bus 24 kann es sich physikalisch um den gleichen Bus handeln, der an die Busschnittstelle 7 angeschlossen ist. Alternativ kann es sich um einen anderen Bus handeln.

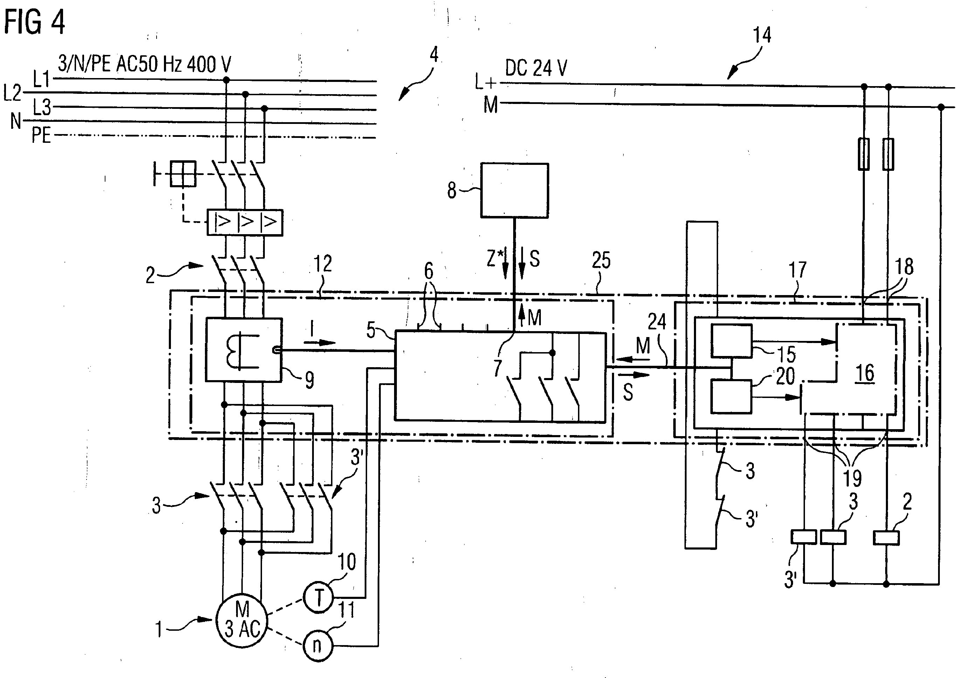

FIG 4 zeigt eine Modifikation der Ausgestaltung der Anschalteinrichtung von FIG 2. Der wesentliche Unterschied der Ausgestaltung von FIG 4 gegenüber der Ausgestaltung von FIG 2 besteht darin, dass bei der Ausgestaltung gemäß FIG 4 auch die sicherheitsgerichtete Schaltung 15 an den Bus 24 angeschlossen ist. Dieser Umstand kann auf verschiedene Weise genutzt werden.

Beispielsweise kann das sicherheitsgerichtete Abschaltsignal S der Motorsteuereinrichtung 5 über die Busschnittstelle 7 zugeführt werden. Die Motorsteuereinrichtung 5 leitet in diesem Fall das sicherheitsgerichtete Abschaltsignal S über den Bus 24 an die sicherheitsgerichtete Schaltung 15 weiter. Die Motorsteuereinrichtung 5 nimmt hierbei vorzugsweise keinerlei Verarbeitung des sicherheitsgerichteten Abschaltsignals S vor, sondern reicht das sicherheitsgerichtete Abschaltsignal S so wie es ist an die sicherheitsgerichtete Schaltung 15 weiter.

Die Übermittlung des sicherheitsgerichteten Abschaltsignals S muss im Ergebnis fehlersicher sein. Eine Möglichkeit hierzu besteht darin, die Busschnittstelle 7 als solche und den Bus 24 als solchen fehlersicher auszugestalten. Wenn jedoch die Busschnittstelle 7 als solche nicht fehlersicher ist und/oder der Bus 24 als solcher nicht fehlersicher ist, ist es erforderlich, das sicherheitsgerichtete Abschaltsignal S gemäß einem fehlersicheren Busprotokoll an die sicherheitsgerichtete Schaltung 15 zu übermitteln. Andere Signale können ebenfalls gemäß diesem Busprotokoll übermittelt werden. Sofern diese Signale nicht sicherheitsgerichtet sind, ist dies jedoch nicht zwingend erforderlich. Ein Beispiel eines sicheren Busprotokolls ist das PROFIsafe-Busprotokoll.

Alternativ oder zusätzlich zum Übermitteln des sicherheitsgerichteten Abschaltsignals S über den Bus 24 ist es möglich, dass die sicherheitsgerichtete Schaltung 15 eine Meldung M an die Motorsteuereinrichtung 5 übermittelt, welchen Schaltzustand die sichere Schalteinrichtung 16 aufweist. Die Motorsteuereinrichtung 5 kann in diesem Fall die Meldung M intern auswerten. Alternativ oder zusätzlich kann die Motorsteuereinrichtung 5 die Meldung M über die Busschnittstelle 7 an die übergeordnete Steuereinrichtung 8 übermitteln.

Bei den obenstehend bisher erläuterten Ausgestaltungen ist die Motorsteuereinrichtung 5 - gegebenenfalls einschließlich der Stromerfassungseinrichtung 9 - eine eigene Baueinheit, die in einem eigenen Gehäuse 12 angeordnet ist. Es ist jedoch alternativ möglich, die Motorsteuereinrichtung 5 (gegebenenfalls einschließlich der Stromerfassungseinrichtung 9) in demselben Gehäuse 17 anzuordnen, in dem auch die sicherheitsgerichtete Schaltung 15, die sichere Schalteinrichtung 16 und die Steuerschaltung 20 angeordnet sind. Dies ist in den FIG 2 und 4 durch eine gestrichelte Umrandung 25 angedeutet.

Die erfindungsgemäße Anschalteinrichtung weist viele Vorteile auf. So ergibt sich beispielsweise im Vergleich zu einer Anschalteinrichtung des Standes der Technik eine verbesserte Diagnosemöglichkeit durch die datentechnische Anbindung der sicherheitsgerichteten Schaltung 15 an die Motorsteuereinrichtung 5. Weiterhin ist eine eigenständige kommunikationstechnische Anbindung der sicherheitsgerichteten Schaltung 15 an die übergeordnete Steuerung 8 nicht erforderlich. Projektierung, Verdrahtung, Inbetriebnahme und Wartung der erfindungsgemäßen Ansteuereinrichtung sind gegenüber dem Stand der Technik reduziert. Die unerwünschten Rückwirkungen einer sicherheitsgerichteten Abschaltung auf die Motorsteuereinrichtung 5 (z. B. Folgefehler durch Unterbrechung der Energieversorgung) können ohne zusätzlichen Aufwand vermieden werden, da alle erforderlichen Informationen bereits innerhalb der Anschalteinrichtung vorliegen und mit geringfügigem Aufwand der Motorsteuereinrichtung 5 bekannt gemacht werden können. Schließlich ergibt sich eine Vereinfachung des Steuerstromkreises für die Schütze 2, 3, 3', was zugleich auch mögliche Fehler in deren Verdrahtung unwahrscheinlicher macht.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Anschalteinrichtung für einen Elektromotor (1),
- wobei die Anschalteinrichtung eine Motorsteuereinrichtung (5), eine Steuerschaltung (20), eine sicherheitsgerichtete Schaltung (15) und eine sichere Schalteinrichtung (16) umfasst,
- wobei der Motorsteuereinrichtung (5) Betriebsinformationen (Z*, n, I, T) des Elektromotors (1) zugeführt werden,
- wobei die Motorsteuereinrichtung (5) anhand der ihr zugeführten Betriebsinformationen (Z*, n, I, T) des Elektromotors (1) einen betriebsmäßigen Sollschaltzustand für ein Schütz (3, 3') ermittelt und an die Steuerschaltung (20) übermittelt,
- wobei der sicherheitsgerichteten Schaltung (15) ein sicherheitsgerichtetes Abschaltsignal (S) zuführbar ist,
- wobei zumindest die Steuerschaltung (20), die sicherheitsgerichtete Schaltung (15) und die sichere Schalteinrichtung (16) in einem gemeinsamen ersten Gehäuse (17) angeordnet sind, so dass die im ersten Gehäuse (17) angeordneten Komponenten eine erste vorkonfektionierte Baueinheit bilden,
- wobei das erste Gehäuse (17) einen Eingangsanschluss (18) sowie einen über die sichere Schalteinrichtung (16) mit dem Eingangsanschluss (18) verbundenen Ausgangsanschluss (19) aufweist,
- die sichere Schalteinrichtung (16) innerhalb des ersten Gehäuses (17) mit der Steuerschaltung (20) und der sicherheitsgerichteten Schaltung (15) derart verbunden ist, dass im Falle des Zuführens des sicherheitsgerichteten Abschaltsignals (S) zur sicherheitsgerichteten Schaltung (15) die sicherheitsgerichtete Schaltung (15) die sichere Schalteinrichtung (16) sicher öffnet und anderenfalls die Steuerschaltung (20) die sichere Schalteinrichtung (16) entsprechend dem ihr zugeführten Sollschaltzustand ansteuert,
- wobei das Schütz (2, 3, 3') über den Ausgangsanschluss (19) geschaltet wird und der Elektromotor (1) über das Schütz (2, 3, 3') an eine Energieversorgung (4) anschaltbar ist.

2. Anschalteinrichtung nach Anspruch 1,
**dadurch gekennzeichnet, dass** die Motorsteuereinrichtung (5) eine Busschnittstelle (7) aufweist, über die die Motorsteuereinrichtung (5) mit einer übergeordneten Steuereinrichtung (8) verbindbar ist.

3. Anschalteinrichtung nach Anspruch 1 oder 2,
**dadurch gekennzeichnet, dass** die Motorsteuereinrichtung (5) und die Steuerschaltung (20) über einen Bus (24) miteinander verbunden sind und dass die Motorsteuereinrichtung (5) den Sollschaltzustand über den Bus (24) an die Steuerschaltung (20) übermittelt.

4. Anschalteinrichtung nach Anspruch 3,
**dadurch gekennzeichnet, dass** auch die sicherheitsgerichtete Schaltung (15) an den Bus (24) angeschlossen ist.

5. Anschalteinrichtung nach Anspruch 4,
**dadurch gekennzeichnet, dass** das sicherheitsgerichtete Abschaltsignal (S) der Motorsteuereinrichtung (5) über die Busschnittstelle (7) zugeführt wird und dass die Motorsteuereinrichtung (5) das sicherheitsgerichtete Abschaltsignal (S) über den Bus (24) an die sicherheitsgerichtete Schaltung (15) weiterleitet.

6. Anschalteinrichtung nach Anspruch 5,
**dadurch gekennzeichnet, dass** die Busschnittstelle (7) und/oder der Bus (24) als solche nicht fehlersicher ist bzw. sind und dass zumindest das sicherheitsgerichtete Abschaltsignal (S) gemäß einem fehlersicheren Busprotokoll an die sicherheitsgerichtete Schaltung (15) übermittelt wird.

7. Anschalteinrichtung nach Anspruch 4, 5 oder 6,
**dadurch gekennzeichnet, dass** die sicherheitsgerichtete Schaltung (15) eine Meldung (M) über einen Schaltzustand der sicheren Schalteinrichtung (16) über den Bus (24) an die Motorsteuereinrichtung (5) übermittelt.

8. Anschalteinrichtung nach Anspruch 7,
**dadurch gekennzeichnet, dass** die Motorsteuereinrichtung (5) die Meldung (M) intern auswertet.

9. Anschalteinrichtung nach Anspruch 2 und Anspruch 7 oder nach Anspruch 2 und Anspruch 8,
**dadurch gekennzeichnet, dass** die Motorsteuereinrichtung (5) die Meldung (M) über die Busschnittstelle (7) an die übergeordnete Steuereinrichtung (8) übermittelt.

10. Anschalteinrichtung nach einem der Ansprüche 2 bis 9, **dadurch gekennzeichnet, dass** die Betriebsinformationen (Z*, n, I, T) des Elektromotors (1) der Motorsteuereinrichtung (5) zumindest teilweise über die Busschnittstelle (7) zugeführt werden.

11. Anschalteinrichtung nach einem der obigen Ansprüche, **dadurch gekennzeichnet, dass** die Betriebsinformationen (Z*, n, I, T) des Elektromotors (1) der Motorsteuereinrichtung (5) zumindest teilweise über Einzelanschlüsse (6) zugeführt werden.

12. Anschalteinrichtung nach einem der obigen Ansprüche, **dadurch gekennzeichnet, dass** die Motorsteuereinrichtung (5) in dem ersten gemeinsamen Gehäuse (17) angeordnet ist, in dem auch die sicherheitsgerichtete Schaltung (15), die sichere Schalteinrichtung (16)-und die Steuerschaltung (20) angeordnet sind.

13. Anschalteinrichtung nach einem der obigen Ansprüche, **dadurch gekennzeichnet, dass** die Betriebsinformationen (Z*, n, I, T) des Elektromotors (1) eine Isttemperatur (T) des Elektromotors (1) umfassen.

14. Anschalteinrichtung nach einem der obigen Ansprüche, **dadurch gekennzeichnet, dass** die Betriebsinformationen (Z*, n, I, T) des Elektromotors (1) eine Istdrehzahl (n) des Elektromotors (1) umfassen.

15. Anschalteinrichtung nach einem der obigen Ansprüche, **dadurch gekennzeichnet, dass** die Betriebsinformationen (Z*, n, I, T) des Elektromotors (1) einen mittels einer Stromerfassungseinrichtung (9) erfassten Iststrom (I) des Elektromotors (1) umfassen.

16. Anschalteinrichtung nach Anspruch 15,
**dadurch gekennzeichnet, dass** die Stromerfassungseinrichtung (9) in demselben Gehäuse (12, 17) angeordnet ist wie die Motorsteuereinrichtung (5), so dass die Stromerfassungseinrichtung (9) und die Motorsteuereinrichtung (5) eine zweite vorkonfektionierte Baueinheit bilden.

## Claims

1. Starting device for an electric motor (1),
- wherein the starting device comprises a motor control device (5), a control circuit (20), a safety-related circuit (15) and a safe switching device (16),
- wherein the motor control device (5) is supplied with operating information (Z*, n, I, T) from the electric motor (1),
- wherein the motor control device (5) determines, on the basis of the operating information (Z*, n, I, T) supplied to it from the electric motor (1), an operational desired switching state for a contactor (3, 3') and sends it to the control circuit (20),
- wherein the safety-related circuit (15) is supplied with a safety-related shut-off signal (S),
- wherein at least the control circuit (20), the safety-related circuit (15) and the safe switching device (16) are arranged in a common first housing (17), such that the components arranged in the first housing (17) form a first pre-assembled unit,
- wherein the first housing (17) has an input terminal (18) and an output terminal (19) connected to the input terminal (18) via the safe switching device (16),
- the safe switching device (16) within the first housing (17) is connected to the control circuit (20) and the safety-related circuit (15) such that in the event of the safety-related shut-off signal (S) being supplied to the safety-related circuit (15) the safety-related circuit (15) safely opens the safe switching device (16) and otherwise the control circuit (20) actuates the safe switching device (16) in accordance with the desired switching state supplied to it,
- wherein the contactor (2, 3, 3') is switched via the output terminal (19) and the electric motor (1) can be connected to a power supply (4) via the contactor (2, 3, 3').

2. Starting device according to claim 1,
**characterised in that** the motor control device (5) has a bus interface (7), via which the motor control device (5) can be connected to a higher-level control device (8).

3. Starting device according to claim 1 or 2,
**characterised in that** the motor control device (5) and the control circuit (20) are interconnected via a bus (24) and that the motor control device (5) sends the desired switching state to the control circuit (20) via the bus (24).

4. Starting device according to claim 3,
**characterised in that** the safety-related circuit (15) is also connected to the bus (24).

5. Starting device according to claim 4,
**characterised in that** the safety-related shut-off signal (S) is supplied to the motor control device (5) via the bus interface (7) and that the motor control device (5) forwards the safety-related shut-off signal (S) via the bus (24) to the safety-related circuit (15).

6. Starting device according to claim 5,
**characterised in that** the bus interface (7) and/or the bus (24) is/are not fail-safe per se and that at least the safety-related shut-off signal (S) is sent to the safety-related circuit (15) in accordance with a fail-safe bus protocol.

7. Starting device according to claim 4, 5 or 6, **characterised in that** the safety-related circuit (15) sends a message (M) about a switching state of the safe switching device (16) to the motor control device (5) via the bus (24).

8. Starting device according to claim 7,
**characterised in that** the motor control device (5) evaluates the message (M) internally.

9. Starting device according to claim 2 and claim 7 or claim 2 and claim 8,
**characterised in that** the motor control device (5) sends the message (M) to the higher-level control device (8) via the bus interface (7).

10. Starting device according to one of claims 2 to 9, **characterised in that** the operating information (Z*, n, I, T) from the electric motor (1) is supplied to the motor control device (5) at least partially via the bus interface (7).

11. Starting device according to one of the preceding claims, **characterised in that** the operating information (Z*, n, I, T) from the electric motor (1) is supplied to the motor control device (5) at least partially via single terminals (6).

12. Starting device according to one of the preceding claims, **characterised in that** the motor control device (5) is arranged in the first common housing (17), in which the safety-related circuit (15), the safe switching device (16) and the control circuit (20) are also arranged.

13. Starting device according to one of the preceding claims, **characterised in that** the operating information (Z*, n, I, T) from the electric motor (1) comprises an actual temperature (T) of the electric motor (1).

14. Starting device according to one of the preceding claims, **characterised in that** the operating information (Z*, n, I, T) from the electric motor (1) comprises an actual speed (n) of the electric motor (1).

15. Starting device according to one of the preceding claims, **characterised in that** the operating information (Z*, n, I, T) from the electric motor (1) comprises an actual current (I) of the electric motor (1) detected by means of a current detection device (9).

16. Starting device according to claim 15,
**characterised in that** the current detection device (9) is arranged in the same housing (12, 17) as the motor control device (5), such that the current detection device (9) and the motor control device (5) form a second pre-assembled unit.

## Revendications

1. Dispositif de démarrage d'un moteur ( 1 ) électrique,
- dans lequel le dispositif de démarrage comprend un dispositif ( 5 ) de commande du moteur, un circuit ( 20 ) de commande, un circuit ( 15 ) de sécurité et un dispositif ( 16 ) de commutation sécurisé,
- dans lequel des informations ( Z*, n, I, T ) de fonctionnement du moteur ( 1 ) électrique sont envoyées au dispositif ( 5 ) de commande du moteur,
- dans lequel le dispositif ( 5 ) de commande du moteur détermine, à l'aide des informations ( Z*, n, I, T ) du moteur ( 1 ) électriques qui lui sont envoyées, un état de commutation de consigne conforme au fonctionnement pour un contacteur ( 3, 3' ) et le transmet au circuit ( 20 ) de commande,
- dans lequel un signal ( S ) d'arrêt de sécurité peut être envoyé au circuit ( 15 ) de sécurité,
- dans lequel au moins le circuit ( 20 ) de commande, le circuit ( 15 ) de sécurité et le dispositif ( 16 ) de commutation sécurisé sont disposés dans un premier boîtier ( 17 ) commun de manière à ce que les composants disposés dans le premier boîtier ( 17 ) forment une première unité de construction préparée à l'avance,
- dans lequel le premier boîtier ( 17 ) a une borne ( 18 ) d'entrée ainsi qu'une borne ( 19 ) de sortie reliée à la borne ( 18 ) d'entrée par le dispositif ( 16 ) de commutation sécurisé,
- le dispositif ( 16 ) de commutation sécurisé est relié à l'intérieur du premier boîtier ( 17 ) au circuit ( 20 ) de commande et au circuit ( 15 ) de sécurité de manière à ce que, si le signal ( S ) d'arrêt de sécurité est envoyé au circuit ( 15 ) de sécurité, le circuit ( 15 ) de sécurité ouvre d'une manière sûre le dispositif ( 16 ) de commutation sécurisé et sinon le circuit ( 20 ) de commande commande le dispositif ( 16 ) de commutation sécurisé conformément à l'état de commutation de consigne qui lui est envoyé,
- dans lequel le contacteur ( 2, 3, 3' )est branché par la borne ( 19 ) de sortie et le moteur ( 1 ) électrique peut être branché sur une alimentation ( 4 ) en énergie par le contacteur ( 2, 3, 3' ).

2. Dispositif suivant la revendication 1, **caractérisé en ce que** le dispositif ( 5 ) de commande du moteur a une interface ( 7 ) de bus par laquelle le dispositif ( 5 ) de commande du moteur peut être relié à un dispositif ( 8 ) de commande supérieur hiérarchiquement.

3. Dispositif suivant la revendication 1 ou 2, **caractérisé en ce que** le dispositif ( 5 ) de commande du moteur et le circuit ( 20 ) de commande sont reliés l'un à l'autre par un bus ( 24 ) et **en ce que** le dispositif ( 5 ) de commande du moteur transmet l'état de commutation de consigne au circuit ( 20 ) de commande par le bus ( 24 ).

4. Dispositif suivant la revendication 3, **caractérisé en ce que** le circuit ( 15 ) de sécurité est raccordé aussi au bus ( 24 ).

5. Dispositif suivant la revendication 4, **caractérisé en ce que** le signal ( S ) d'arrêt de sécurité est envoyé au dispositif
( 5 ) de commande du moteur par l'interface ( 7 ) de bus et **en ce que** le dispositif ( 5 ) de commande du moteur achemine le signal ( S ) d'arrêt de sécurité au circuit ( 15 ) de sécurité par le bus ( 24 ).

6. Dispositif suivant la revendication 5, **caractérisé en ce que** l'interface de bus et/ou le bus ( 24 ) en tant que tel n'est ou ne sont pas assurés à l'encontre d'une défaillance et **en ce qu'**au moins le signal ( S ) d'arrêt de sécurité est transmis au circuit ( 15 ) de sécurité suivant un protocole de bus assuré à l'encontre d'une défaillance.

7. Dispositif suivant la revendication 4, 5 ou 6, **caractérisé en ce que** le circuit ( 15 ) de sécurité transmet un message ( M ) sur un état de commutation du dispositif ( 16 ) de commutation sécurisé au dispositif ( 5 ) de commande du moteur par le bus ( 24 ).

8. Dispositif suivant la revendication 7, **caractérisé en ce que** le dispositif ( 5 ) de commande du moteur exploite le message ( M ) en interne.

9. Dispositif suivant la revendication 2 et la revendication 7 ou la revendication 2 et la revendication 8, **caractérisé en ce que** le dispositif ( 5 ) de commande du moteur transmet le message ( M ) au dispositif ( 8 ) de commande supérieur hiérarchiquement par l'interface ( 7 ) de bus.

10. Dispositif suivant l'une des revendications 2 à 9, **caractérisé en ce que** les informations ( Z*, n, I, T ) de fonctionnement du moteur ( 1 ) électrique sont envoyées au dispositif ( 5 ) de commande du moteur au moins en partie par l'interface ( 7 ) de bus.

11. Dispositif suivant l'une des revendications précédentes, **caractérisé en ce que** les informations ( Z*, n, I, T ) de fonctionnement du moteur ( 1 ) électrique sont envoyées au dispositif ( 5 ) de commande du moteur au moins en partie par des bornes ( 6 ) individuelles.

12. Dispositif suivant l'une des revendications précédentes, **caractérisé en ce que** le dispositif ( 5 ) de commande du moteur est disposé dans le premier boîtier ( 17 ) commun dans lequel sont disposés également le circuit ( 15 ) de sécurité, le dispositif ( 16 ) de commutation sécurisé et le circuit ( 20 ) de commande.

13. Dispositif suivant l'une des revendications précédentes, **caractérisé en ce que** les informations ( Z*, n, I, T ) de fonctionnement du moteur ( 1 ) électrique comprennent une température ( T ) réelle du moteur ( 1 ) électrique.

14. Dispositif suivant l'une des revendications précédentes, **caractérisé en ce que** les informations ( Z*, n, I, T ) de fonctionnement du moteur ( 1 ) électrique comprennent une vitesse ( n ) de rotation réelle du moteur ( 1 ) électrique.

15. Dispositif suivant l'une des revendications précédentes, **caractérisé en ce que** les informations ( Z*, n, I, T ) de fonctionnement du moteur électrique comprennent un courant ( I ) réel du moteur ( 1 ) électrique détecté au moyen d'un dispositif ( 9 ) de détection du courant.

16. Dispositif suivant la revendication 15, **caractérisé en ce que** le dispositif ( 9 ) de détection du courant est disposé dans le même boîtier ( 12, 17 ) que le dispositif ( 5 ) de commande du moteur de sorte que le dispositif ( 9 ) de détection du courant et le dispositif ( 5 ) de commande du moteur forment une deuxième unité de construction préparée à l'avance.
